# EUROPEAN PATENT APPLICATION

(11) **EP 1 992 859 A2**
(43) Date of publication of application: **19.11.2008**
(21) Application number: 08425262.6
(22) Date of filing: 18.04.2008
(51) Int. Cl.: F16L 25/00, F16J 15/06

(54) **Hydraulic sealing system for the jointing of corrugated tubes**

(30) Priority: 15.05.2007 IT MI20070978
(71) Applicant: Industrie Polieco - M.P.B. Srl, 25046 Cazzago San Martino (IT)
(72) Inventor: Tonelli Luigi, Cortefranca (IT)
(74) Representative: Jaumann, Paolo

(57) **Abstract**

The object of this invention is a hydraulic sealing system for the jointing of two corrugated tubes (10). The sealing system according to the present invention is characterized by the fact of comprising a hydrophilic sealing element (40) positioned in one oft the hollows (11) of said first corrugated tube that engages in the cup-type sleeve (20) connected to a second corrugated tube.

## Description

The present invention regards a hydraulic sealing system to improve the seal of a corrugated tube joint.

Corrugated tubes are known to be used for realizing non-pressurized buried discharge lines. The corrugated tubes are of a double-walled type and therefore present a corrugated outer profile and a smooth inner wall, so as to facilitate the disposal of the fluid passing through the line.

More in particular, the corrugated tubes known and commonly employed are made of high density polyethylene, in accordance with the European standards currently used for this purpose, in particular the EN 13476-1 and UNI 10968-1 standards.

The critical point of every sewage duct is shown by the jointing points between the tubes forming the line. In order to minimize the number of joints as much as possible, the corrugated tubes of the subject type are generally realized in lengths of 6-12 meters.

To this date, two alternative methods have been used to realize the joints between two corrugated tubes.

The first method is that of head-piece-to-head-piece welding, which consists of welding together the facing ends of two tubes. This system is actually seldom used in the case of buried polyethylene tubes, because of the fact that the minimal wall thicknesses of the tubes render the operation highly complex and difficult to perform in the field. Moreover, this operation demands a specialized workforce, which makes the laying operation more expensive.

The second method already known and widely used today for realizing the joints between two corrugated tubes is the so-called sleeve (or cup) and gasket type.

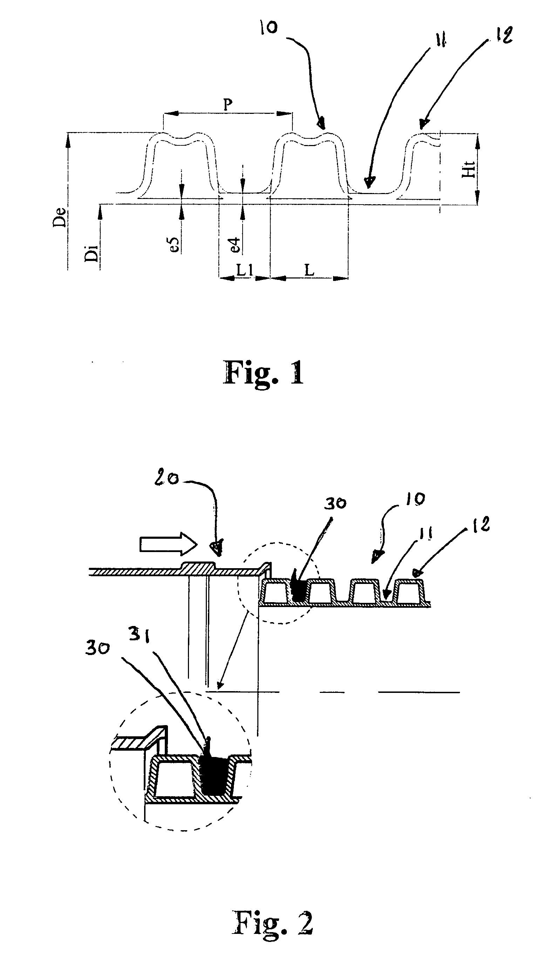

An example of this jointing type is shown in Figure 2 of the attached tables of drawings.

The sleeve and gasket type method is performed in accordance with European reference standards that define the lengths and thicknesses of the elements involving the joint. For the jointing sleeves in particular, the essential parameters are the length and inner diameter of the sleeve, which must be consistent with the outer diameter of the tube.

The gasket of the sleeve-type jointing system is generally made of EPDM (butadiene-ethylenepropylene thermal polymer), which offers, at limited costs, fair mechanical characteristics, good temperature and polar solvent resistance, no oxidation sensitivity and, of foremost interest for the field of application under consideration, a resistance to the chemical agents found in sewage wastes comparable to that of polyethylene.

Based on the known art, in the sleeve and gasket system the EPDM gasket is fitted in the space formed by the first two ribs following the head-piece of the tube. This gasket presents a profile characterized by an elastically deforming lip, as seen in Figure 2 of the enclosed tables of drawings. In Figure 2, an arrow also represents the direction of motion of the sleeve with respect to the corrugated tube. The projecting lip of the gasket must near the side of the sleeve must be bent over as shown in Figure 2, so that it bending can be occur as shown in the figure and as expected in the profile designing stage of the gasket in question. In this manner, when the jointing is made the lip is squeezed by the inner portion of the side of the sleeve that the corrugated tube is fitted into. The squeezing of the gasket lip is essential for the proper seal of the gasket itself.

The gasket's particular profile and position, as well as the size of the sleeve, guarantee that during the gasket assembling phase, the gasket lip in question bends over without damage, thus ensuring an optimal seal of the joint.

The sleeve-type joint is realized through operations requiring some care to avoid damaging the elements that guarantee the sealing action of the joint.

These operations, which are well known to the specialist in the branch, comprise a lubrication of the inside of the sleeve and a subsequent insertion of the corrugated tube into the sleeve, using an axial pushing action during which any impact or excessive force capable of damaging the joint or the sleeve itself, must be avoided.

In order to complete the picture of the hydraulic system under discussion, it is worth remembering that the tube laying phase plays an equally important role in the sealing action of the joint. For a proper tube laying action, it is in particular essential to properly perform the procedure by laying down a sand and gravel bed of a thickness of at least 10 cm, so as to prevent the topside of the tubing rib from resting directly on the excavated ground, utilizing a filling material, around the tube, of a uniform grain size and such as to be suitable for ensuring that the material itself penetrates inside the corrugations of the tubes, and filling the excavation with this material up to a thickness of about 40 cm above the extrados of the tube, prior to covering up the excavation with embanking material.

Even when the jointing operation is realized with the greatest care and the laying operation is performed in accordance with criteria outlined herein and known to the specialist in the branch, and despite the fact that the entire tube-gasket-sleeve system is subjected to a number of tests to evaluate the system's hydraulic seal based on the reference standards, in practice certain problems occasionally arise that can put the hydraulic seal of the system at risk.

In has in particular been experienced that only a few days after the installation, certain sealing problems such as losses or infiltrations may arise in the hydraulic system.

The cause of these defects in the sealing of the joints can be attributed to both an imperfect realization of the joint and to a lack of expertise of the enterprises performing the installation of the tubes. From what has been outlined up to this point, it is however evident that the proper efficiency of the gasket and sleeve jointing system currently employed is affected by numerous variables subject to human error and that the operators' incurring in such errors is anything but infrequent.

The presence of losses or infiltrations at the joints is naturally a highly undesirable occurrence.

In the case of a sewage piping network, for instance, the losses toward the outside of the joints may entail a high risk of polluting the soil and the aquifers. In the case of a utility wastewater network, the eventual losses may determine localized sags near the pipeline, sags that may naturally compromise, even to a serious extent, the stability of the overhanging ground.

It is likewise also highly undesirable that an infiltration of water should occur from the outside toward the inside of the pipe. Infiltrations of this type may cause an increase of the liquid flow conveyed to the treating system and a simultaneous dilution of the pollutant load. This may create operational problems in the treating plant the hydraulic system is connected to, thus compromising the plant's purifying capacity. As a result of this decreased purifying capacity, there may be a worsening of the quality of the water discharged from the plant to the surrounding surface waters.

In both cases, whether losses or infiltrations, the hydraulic system's poor sealing ability at the tube joints is a drawback likely to entail even highly serious consequences. It is therefore an occurrence to be absolutely avoided, but also one that the current jointing systems known at the state of the art are unfortunately unable to avert.

The prime scope of this invention is therefore to furnish a hydraulic sealing system capable of improving the present seal of the jointing system of corrugated tubes, and of allowing a solution of the problems mentioned above and left unsolved by today's known systems.

In particular, the scope of the invention within this scope is to provide a sealing system for the seal of corrugated tubes capable of realizing a seal to be leak-proof both against the hydraulic losses and infiltrations of water from the outside to the inside of the sewage system.

Moreover, a scope of the present invention is to provide a sealing system for corrugated tube joints that provides the workforce with the same assembling and laying operations of the traditional systems in current use, so as to abstain from further complicating these procedures and avoid having to train the workforce in the laying a new system.

Another scope of the present inventions is to provide a sealing system for corrugated tube joints capable of eliminating the effects of human error during the jointing and laying process.

This task and additional tasks that will become better evident in the description of a preferred form of embodiment of the present invention, are achieved by a joint sealing system of a sleeve and annular gasket type for the jointing of two corrugated tubes, wherein the annular gasket is fitted into a hollow of the corrugations of a first of the mentioned corrugated tubes that engage in said sleeve-type portion of a second of said corrugated tubes, so as to realize the jointing of said tubes, characterized by the fact that it comprises an additional hydrophilic sealing element which is also fitted into one of the hollows of said first corrugated tube that enter the mentioned sleeve-type portion.

Further characteristics and advantages of the present invention will be more clearly evident from the following detailed description, given in an exemplifying and non-limiting form and illustrated in the enclosed figures, wherein:
The Figure 1 shows a longitudinal section of a corrugated tube according to the already known state of the art;
The Figure 2 shows, again in a longitudinal section with a vertical plane of a jointing system composed of a sleeve and gasket of a traditional kind, evidencing the particular gasket profile;
The Figure 3 shows, again in a longitudinal section of the same sleeve and gasket type jointing system of Figure 2, where the corrugated tube is inserted into the sleeve, and the gasket lip is squeezed as needed for a proper seal;
The Figure 4 shows, again in a longitudinal section with a vertical plane, the sealing system for jointing corrugated tubes according to this invention, composed of an EPDM gasket and of the hydrophilic cord fitted into the hollows of the corrugated tube.
The Figure 5 shows, again in a section, the sealing system for joining corrugated tubes according to the present invention in an assembled configuration and with the tube in a laid condition;
The Figure 6 shows, again in a section, the sealing system for jointing corrugated tubes according to the present invention, in an operating condition.

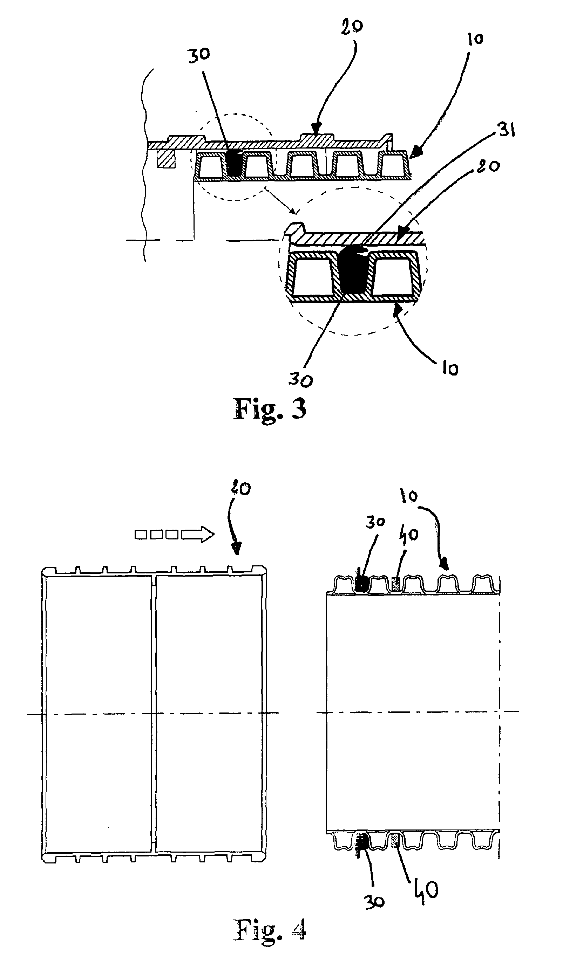

According to the preferred form of realization of the present invention shown for exemplifying purposes in the mentioned figures, the same concerns a sealing system for the joints of corrugated tubes wherein the joint is constituted of a sleeve and gasket of the type shown in the Figures 2 and 3.

The system aims at forming the jointing between the first corrugated tube generally indicated by the reference number 10, a sleeve indicated by the reference number 20 and a second adjacent tube.

The Figure 2 shows the first corrugated tube 10 and the sleeve 20 of the second adjacent tube as being positioned one near the other but not yet connected. The sealing system comprises an annular gasket 30 made of EPDM. This annular gasket is placed between the hollow of the first two ribs 12 of the first corrugated tube 10 that follow the head-piece, or the starting rim of the corrugated tube itself, in one of the hollows 11 of the corrugated profile. The annular gasket 30 presents, in a cross-section with a vertical plane as seen in the figures, a profile fitted with a lip 31 projecting toward the outside of the profile of the corrugated tube 10, so as to optimize the jointing seal.

As shown in particular in the subsequent Figure 3, the lip 31 of the annular gasket 30 deforms by bending backward over the gasket itself, once the jointing between the two facing tubes is realized by inserting the first corrugated tube 10 inside the sleeve 20 of the second tube. Thanks to the elastic characteristics of the material the gasket 30 is made of, the lip 30 tends to revert to its position in the un deformed condition of Figure 2, thus exercising an elastic force on the inner wall of the sleeve 20 which ensures that the lip 31 tightly closes the gap between the outer surface of the rib 12 of the first corrugated tube 10 and the inner wall of the sleeve 20.

With particular reference to Figure 4, the sealing system according to the present invention comprises a further hydrophilic sealing element designated by the reference number 40. This further hydrophilic element 40, which is likewise of an annular form so as to run along the entire perimeter of the corrugated tube, is advantageously positioned inside the hollow 11 immediately adjacent to the EPDM gasket 30. The hydrophilic sealing element is realized for instance of hydrophilic rubber or more in particular, such an element may be realized of a bentonitic material.

The characteristic of the hydrophilic sealing element 40 is to the expand in volume, upon contact with a liquid, up to three times the original volume. Thanks to this behavior of the material, the sealing element 40 is capable, upon contact with water, of expanding up to the point of occupying the entire space at its disposal between the corrugations of the corrugated tube 10 and the internal wall of the sleeve 20.

The barrier formed by the sealing element 40 proves to be effective both against eventual losses of liquid from the inside toward the outside of the tube as well as against infiltrations of liquids from the outside toward the inside of the joint.

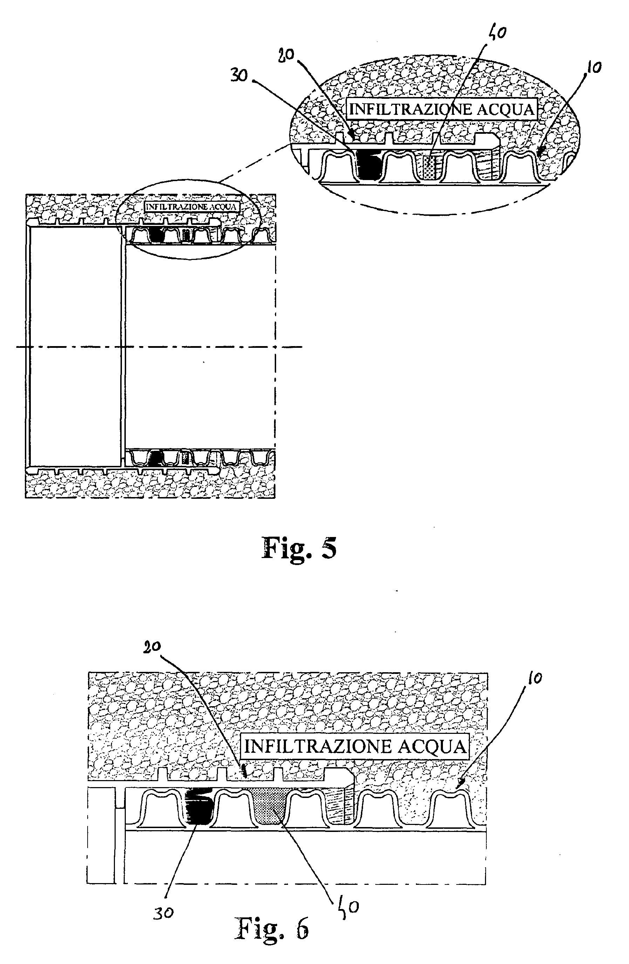

With particular reference to the situation shown in Figure 5, where the water is found in the annulus between the corrugated tube and the sleeve as a result of a loss of fluid from the tube toward the outside or of an infiltration of water from the surrounding soil toward the inside of the joint, the sealing element 40 expands by increasing in volume upon contact with the water that has infiltrated itself into the space between the tube 10 and the sleeve 20. This expansion results in a configuration as shown in Figure 6, where the sealing element 40 occupies said annulus between tube and sleeve, thus realizing an optimum sealing of the joint.

The hydrophilic sealing element 40 may appropriately present a cross section with a rectangular profile, as shown in the figure. In particular, the dimensions of the section must be such as not to exceed the outer diameter of the first corrugated tube 10, so as to not constitute a hindrance for engaging the tube 10 into the sleeve 20 of the second tube.

It has thus been shown that the sealing system according to the present invention allows achieving all the advantages sought after, and overcoming the problems left unresolved by the systems already known at the state of the art.

In particular, it has been shown that the sealing system according to the present invention allows realizing a perfectly tight seal against both hydraulic losses as well as infiltrations of water from the outside toward the inside of the sewage system. The sealing system made according to the present invention and outlined up to this point is also extremely simple to implement.

What's more, the extreme simplicity of the system also allows it to be assembled and layed without additional complications for the workforce, which amounts to the fact that there are no increases in installation costs, and that no specialized manpower need be trained.

Moreover, it has been shown that the sealing system according to the present invention allows eliminating the harmful effect of human error while performing the joining and laying of the tubes, thus allowing it to eliminate any associated losses and infiltrations, and any lacks of expertise during the assembling and laying operations.

The sealing system according to the present invention thus proves to be suitable for simply and effectively resolving the drawbacks consisting of losses and infiltrations that affect the known systems of whatever origin.

Numerous modifications may be undertaken by an expert in the branch, without thereby abandoning the range of protection of the present invention.

The range of protection of the claims is therefore not to be limited by the illustrations or by the preferred forms of embodiment shown in the description given for exemplifying purposes. On the contrary, the claims are to comprise all the characteristics of a patentable novelty capable of being derived from the present invention, including all the characteristics that a specialist in the trade would treat as being equivalent.

## Claims

1. Sealing system for a sleeve (20) and annular gasket (30) type joint for joining two corrugated tubes (10) where said annular gasket (30) is fitted into a hollow (100) of the corrugations of a first of said corrugated tubes (10) that engage into said sleeve type portion (20) of a second of said corrugated tubes in order to realize the jointing of said tubes, **characterized by** the fact that it additionally comprises a hydrophilic sealing element (40) which is also fitted into one of the hollows (11) of said first corrugated tube (10) that engage in said sleeve type portion (20).

2. Sealing system according to the previous claim, **characterized by** the fact that said annular gasket (30) is positioned between the first two ribs (12) of said first corrugated tube (10) and by the fact that said hydrophilic sealing element (40) is positioned on said first corrugated tube (10) in the hollow (11) immediately adjacent to said gasket (30).

3. Sealing system according to any of the previous claims, **characterized by** the fact that said annular gasket (30) is realized of EPDM of a similar material.

4. Sealing system according to any of the previous claims, **characterized by** the fact that said hydrophilic sealing element (40) is realized of hydrophilic rubber.

5. Sealing system according to claim 4, **characterized by** the fact that said hydrophilic sealing element (40) is realized of a bentonitic material.

6. Sealing system according to any of the previous claims, **characterized by** the fact that said hydrophilic sealing element (40) is an annular element fitted into said hollow (11) of said first corrugated tube (10) and runs along the entire circumferential perimeter of said first corrugated tube (10) identified by said hollow (11).

7. Sealing system according to any of the previous claims, **characterized by** the fact that said hydrophilic sealing element (40) presents a cross section with a vertical plane of an essentially rectangular profile.
